# EUROPEAN PATENT SPECIFICATION

(11) **EP 3 800 720 B1**
(45) Date of publication and mention of the grant of the patent: **02.07.2025**
(21) Application number: 19817567.1
(22) Date of filing: 24.09.2019
(51) Int. Cl.: H01M 10/0583, H01M 10/04

(54) **METHOD OF PREPARING A LAMINATED CELL**
VERFAHREN ZUR HERSTELLUNG EINER LAMINIERTEN ZELLE
PROCÉDÉ DE PRÉPARATION D'UNE CELLULE DE BATTERIE STRATIFIÉE

(30) Priority: 16.08.2019 CN 201910771940
(43) Date of publication of application: 07.04.2021
(73) Proprietor: Contemporary Amperex Technology (Hong Kong) Limited, Central, Central And Western District (HK)
(72) Inventor: YANG, Rukun, Ningde Fujian 352100 (CN); ZENG, Liliang, Ningde Fujian 352100 (CN); LI, Panpan, Ningde Fujian 352100 (CN); WEI, Hongsheng, Ningde Fujian 352100 (CN); WANG, Zechao, Ningde Fujian 352100 (CN); ZHENG, Gengjie, Ningde Fujian 352100 (CN)
(74) Representative: Nordic Patent Service A/S
(86) International application number: PCT/CN2019/107516
(87) International publication number: WO 2021/031287

(56) References cited:
- EP-A2- 3 514 863
- WO-A1-2012/020480
- WO-A1-2019/053530
- CN-A- 105 119 009
- CN-A- 108 832 190
- CN-A- 109 565 068
- KR-A- 20170 059 739
- KR-A- 20170 059 739
- US-A1- 2012 189 894

## Description

### Technical Field

The present disclosure relates to the technical field of battery cell preparation, and particularly to a method of preparing a laminated cell.

### Background

In the traditional method of preparing a laminated cell, a laminated cell is formed by firstly cutting a continuous laminate into a plurality of laminate units and then stacking the laminate units.

KR1020170059739 relates to an electrode assembly, more specifically, to the electrode assembly folding apparatus and an electrode assembly folding method using the same. It can simply the fabrication method of the battery and increase the battery energy density.

EP3514863A2 relates to a method for producing an electrode stack for an energy store of a motor vehicle; as electrodes, cathodes and anodes being alternately stacked on top of one another with the interposition of a separator strip, the separator strip first having the cathodes and anodes laid thereon, thereby forming an electrode strip, and the electrode strip subsequently being folded numerous times to stack the cathodes and the anodes on top of one another

These traditional preparation methods are complicated in process and have low production efficiency, and are therefore not suitable for mass production.

### Summary

An object of the present disclosure comprises providing a method of preparing a laminated cell, which can simplify the preparation process and improve production efficiency, and thus is suitable for mass production.

An embodiment of the present disclosure can e.g. be implemented in the following manner:
An embodiment of the present disclosure provides a method of preparing a laminated cell, comprising the following steps of:
   laying out a plurality of first electrodes successively and intervally between two separators along a first direction, such that the plurality of first electrodes and the two separators form together an internal layer;
   laying out a plurality of second electrodes successively on both surface sides of the internal layer along the first direction with the second electrodes on one surface side and the second electrodes on the other surface side placed alternately, such that the plurality of second electrodes and the internal layer form together a composite lamination, wherein each of the second electrodes respectively is parallel to a respective first electrode;
   pressing the composite lamination, to form a staggered lamination; and
   folding the staggered lamination in a zigzag manner
   wherein the step of pressing the composite lamination to form a staggered lamination comprises steps of:
heating the composite lamination, such that a hot-melt adhesive adhered to the separator melts; and
exerting opposite pressures on the respective second electrodes on both sides of the composite lamination in a stacking layer direction of the second electrodes, the separators and the first electrodes, such that the separators are each creased at an interstice between any two adjacent first electrodes;
wherein after the step of exerting opposite pressures on the respective second electrodes on both sides of the composite lamination in a stacking layer direction, the method further comprises a step of:
   stopping exerting the pressures, when the opposite two sides of the composite lamination are flat.

Optionally, the step of laying out a plurality of second electrodes successively on both surface sides of the internal layer along the first direction with the second electrodes on one surface side and the second electrodes on the other surface side placed alternately to form a composite lamination comprises the following steps of:
placing one of two adjacent second electrodes on the separator on one surface side of the internal layer, and making the same correspond to one of two adjacent first electrodes; and
placing the other one of the two adjacent second electrodes on the separator on the other surface side of the internal layer, and making the same correspond to the other one of the two adjacent first electrodes, wherein each second electrode and the corresponding first electrode thereof are projected onto a direction perpendicular to the separator, with the projections of the each second electrode and the corresponding first electrode thereof at least partially overlapping each other.

Optionally, the step of folding the staggered lamination in a zigzag manner comprises the step of:
folding the staggered lamination in a zigzag manner, wherein respective interstices formed between respective first electrodes are used as folding positions.

Optionally, the method of preparing a laminated cell provided in the embodiment of the present disclosure further comprises the step of flattening the staggered lamination folded in a zigzag manner to obtain a laminated cell with certain compactness.

Optionally, the method of preparing a laminated cell provided in the embodiment of the present disclosure further comprises the step of sealing openings along the edges of the two separators.

Optionally, the method of preparing a laminated cell provided in the embodiment of the present disclosure further comprises selecting a cathode as the first electrode, and selecting an anode as the second electrode.

Optionally, in the method of preparing a laminated cell provided in the embodiment of the present disclosure, the first direction is parallel to the extension direction of the separator.

Compared with the prior art, as for the method of preparing a laminated cell provided in the embodiments of the present disclosure, the plurality of second electrodes are arranged alternately on both surface sides of the internal layer, together forming a composite lamination; when pressing this composite lamination, the separator is creased, hereby forming a staggered lamination; and the staggered lamination is folded in a zigzag manner, forming a laminated cell. The whole preparation process is convenient and fast, wherein the operation of stacking after cutting off is replaced by folding, meanwhile, additional operations such as positioning of trimming positions before the cutting operation are omitted, and since the first electrodes are staggered and the separators are creased at the folding positions, the folding process can be completed rapidly. Thus, the method of preparing a laminated cell provided in the embodiments of the present disclosure has the following beneficial effects: simplifying the preparation process of laminated cells, improving the production efficiency significantly, and being suitable for mass production.

### Brief Description of the Drawings

In order to more clearly describe the technical solutions in the embodiments of the present disclosure, the figures to be used in the embodiments will be briefly introduced in the following contents. It shall be understood that the following figures merely show certain embodiments of the present disclosure, and thus should not be deemed as limiting the scope thereof. For a person ordinarily skilled in the art, further relevant figures could be obtained according to these figures without using inventive efforts.
Fig. 1 is a schematic block diagram showing the flow chart of a method of preparing a laminated cell provided in an embodiment of the present disclosure;
Fig. 2 shows a schematic diagram showing the structure of an internal layer;
Fig. 3 shows a schematic diagram showing the structure of a composite lamination;
Fig. 4 is a schematic block diagram showing the flow chart of substeps of Step S102 in Fig. 1;
Fig. 5 is a structural schematic diagram showing the forming of a staggered lamination by means of pressing;
Fig. 6 is a schematic block diagram showing the flow chart of substeps of Step S103 in Fig. 1;
Fig. 7 is a schematic diagram showing the structure of a laminated cell;
Fig. 8 is a schematic block diagram showing the structure of a laminating system provided in an embodiment of the present disclosure; and
Fig. 9 is a schematic diagram showing the structure of the laminating device in Fig. 8.

Reference signs: 10-internal layer; 11-first electrode; 12-seperator; 20-composite lamination; 21-second electrode; 30-staggered lamination; 40-laminated cell; 100-arranging device; 200-hot-pressing device; 300-laminating device; 310-guide roller; 330-feeding assembly; 331-swinging arm; 333-double roller driving assembly; 335-cutting assembly; 350-carrying assembly; 351-carrying platform; and 353- folding and flattening mechanism.

### Detailed Description of the Embodiments

In order to make the objects, the technical solutions and the advantages of the embodiments of the present disclosure clearer, the technical solutions of the embodiments of the present disclosure will be clearly and comprehensively described below with reference to the attached figures in the embodiments of the present disclosure. Obviously, the described embodiments are merely some of the embodiments of the present disclosure, but not all the embodiments. Generally, the assemblies of the embodiments of the present disclosure that are described and shown here in the figures may be arranged and designed according to various configurations.

Thus, the following detailed description of the embodiments of the present disclosure that are provided in the figures merely represents selected embodiments of the present disclosure, rather than being intended to limit the scope of the present disclosure for which protection is sought.

It shall be noted that similar reference signs and letters represent similar items in the following figures, thus, once a certain item is defined in one figure, no further definition and explanation of this item is necessary in the subsequent figures.

In the description of the present disclosure, it shall be understood that orientations or position relationships indicated by terms such as "upper", "lower", "inner", "outer", "left" and "right" are orientations or position relationships shown based on the figures, or orientations or position relationships in which the product of this disclosure is conventionally placed during use, or orientations or position relationships that could be conventionally understood by a person skilled in the art, merely for the purposes of facilitating the description of the present disclosure and simplifying the description, rather than indicating or implying that a specified apparatus or element must have a specific orientation, or be constructed and operated in a certain orientation, and therefore cannot be construed as limiting the present disclosure

In addition, terms such as "first" and "second" are used merely for purpose of differentiated description, and cannot be construed as indicating or implying to have importance in relativity.

In the description of the present disclosure, it shall further be clarified that unless otherwise expressly specified and defined, terms such as "provide" and "connect" shall be construed in a broad sense. For example, the term "connect" may refer to fixed connection, or detachable connection, or integrated connection; it may refer to mechanical connection, or electrical connection; or it may refer to direct connection, or indirect connection via an intermediate, or inner communication between two elements. For a person ordinarily skilled in the art, the specific meanings of the above-mentioned terms in the present disclosure could be construed in accordance with specific circumstances.

The embodiments of the present disclosure will be described in detail below referring to the figures.

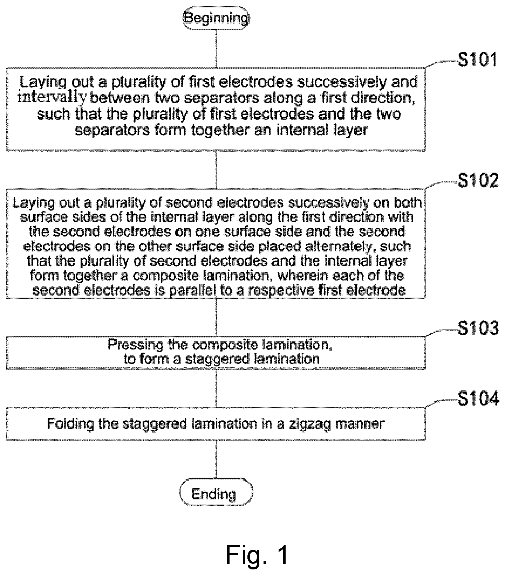

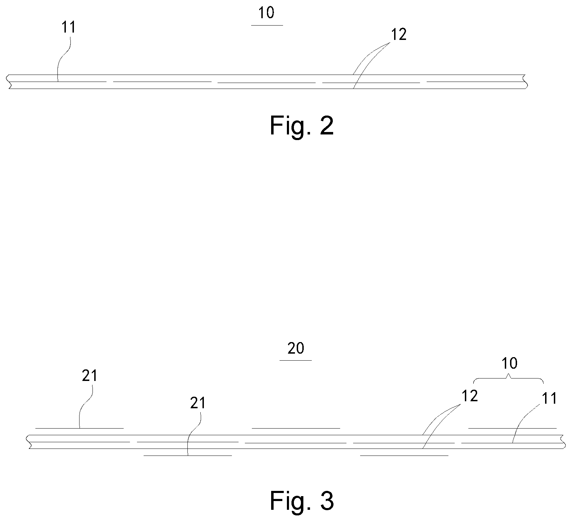

Fig. 1 is a schematic block diagram showing the flow chart of a method of preparing a laminated cell provided in an embodiment of the present disclosure; and in combination with Figs. 1 and 2, the method of preparing a laminated cell comprises:
Step S101: laying out a plurality of first electrodes 11 successively and intervally between two separators 12 along a first direction, such that the plurality of first electrodes 11 and the two separators 12 form together an internal layer 10.

When successively laying out the plurality of first electrodes 11, the distance between adjacent first electrodes 11 needs to be controlled. Since in subsequent steps, no trimming at this interstice is necessary, in the embodiment of the present disclosure, compared with the conventional preparation method, the interstice between adjacent first electrodes 11 can be smaller, that is to say, more first electrodes 11 can be placed on a separator 12 of the same length, hereby achieving the effect of reducing production costs.

Referring further to Fig. 2, the internal layer 10 resulting from Step S101 comprises two layers of separators 12, i.e. an upper layer and a lower layer, and the plurality of first electrodes 11 placed intervally between the two layers of separators 12, wherein the distances between respectively adjacent two first electrodes 11 are identical.

Further, in combination with Fig. 1 and Fig. 3, the method of preparing a laminated cell can further comprise:
Step S102: laying out a plurality of second electrodes 21 successively on both surface sides of the internal layer 10 along the first direction with the second electrodes on one surface side and the second electrodes on the other surface side placed alternately, such that the plurality of second electrodes 21 and the internal layer 10 form together a composite lamination 20, wherein each of the second electrodes 21 is parallel to a respective first electrode 11. Specifically, the position of one second electrode 21 corresponds to the position of one first electrode 11.

After the completion of Step S101, it begins to implement Step S102. **In** the embodiment of the present disclosure, the composite lamination 20 is formed by laying out the plurality of second electrodes 21 successively on both surface sides of the internal layer 10 in a way that the second electrodes on one surface side and the second electrodes on the other surface side are alternately placed.

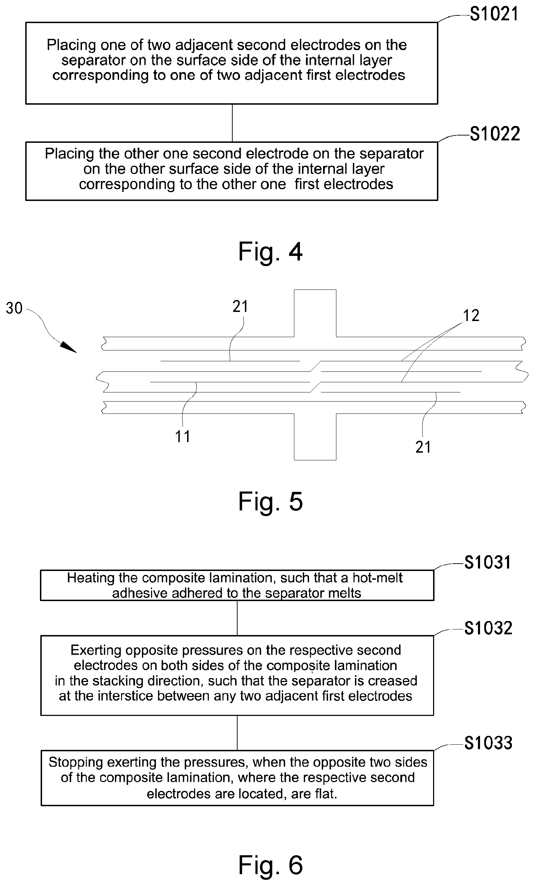

Further, referring to Fig. 4, Step S102 can further comprise the following substeps:
Substep S1021: placing one of two adjacent second electrodes 21 on the separator 12 on one surface side of the internal layer 10, and making the same correspond to one of two adjacent first electrodes 11; and
Substep S1022: placing the other one of the two adjacent second electrodes 21 on the separator 12 on the other surface side of the internal layer 10, and making the same correspond to the other one of the two adjacent first electrodes 11, wherein each second electrode 21 and the corresponding first electrode 11 thereof re projected onto a direction perpendicular to the separator, with the projections of the each second electrode and the corresponding first electrode thereof at least partially overlapping each other.

In order to avoid influences on subsequent folding step caused by blocking interstices between adjacent first electrodes 11 during arrangement of the second electrodes 21, it is required, when performing Substep S1021 or Substep S1022, to assure that the second electrode 21 is arranged within a corresponding region range of the first electrode 11 on the separator 12, that is to say, in the first direction, the margin of the second electrode 21 does not exceed the margin of the corresponding first electrode 11 thereof, i.e. the interstice between projections of two adjacent second electrodes 21 in a direction perpendicular to the internal layer covers the interstice between the corresponding two adjacent first electrodes 11, with the two adjacent second electrodes placed on both surface sides of the internal layer.

The specific laying-out process of the second electrodes 21 can be adjusted according to practical circumstances. For example, in another embodiment, a method may by adopted, in which a plurality of second electrodes 21 are firstly placed intervally on one surface side of the internal layer 10, and then a plurality of second electrodes 21 are placed intervally on the other surface side of the internal layer 10, as long as it can achieve that on the formed composite lamination 20, any two second electrodes 21 among the plurality of second electrodes 21 distributed on the two surface sides of the internal layer 10 are spaced from each other and staggeredly placed in a vertical direction. This vertical direction may be a direction perpendicular to the extension direction of the separator 12.

Further, in combination with Figs. 1 and 5, the method of preparing a laminated cell can further comprise:
Step S103: pressing the composite lamination 20 to form a staggered lamination 30.

After Step S102, the arrangement of the second electrodes 21 is completed, and the implementation of Step S103 begins, after that the second electrodes and the internal layer 10 together form the composite lamination 20.

Referring to Fig. 6, Step S103 can further comprise the following substeps:
Substep S1031: heating the composite lamination 20, such that a hot-melt adhesive adhered to the separator 12 melts.

A hot-melt adhesive is adhered to the separator 12, and after Substep S1031, the hot-melt adhesive melts to have stickiness, such that the first electrode 11 and the second electrode 21 can be stuck together.

Substep S1032: exerting opposite pressures on the respective second electrodes 21 on both sides of the composite lamination 20 in the stacking layer direction of the first electrodes 11 and the corresponding second electrodes 21, such that any two adjacent first electrodes 11 are staggered in the first direction, and such that the separators 12 are each creased at the interstice between any two adjacent first electrodes 11.

In an embodiment of the present disclosure, the composite lamination 20 is pressed by way of hot-pressing, as a hot-melt adhesive is adhered to the selected separator 12. In another embodiment, if an adhesive adhered to the selected separator 12 has an adhesive effect at a room temperature, the composite lamination 20 can be pressed correspondingly by way of cold-pressing, which means no heating is required.

When exerting pressures on the composite lamination 20 during the execution of Substep S1032, due to that the individual second electrodes 21 at the two sides of the composite lamination 20 protrudes, the pressure acts on one sides of the respective second electrodes 21 away from the first electrodes 11, and the pressurizing direction is parallel to the stacking layer direction of the second electrodes 21, the separators 12 and the first electrodes 11, that is to say, the pressure direction is perpendicular to the surface of the second electrodes 21, and the electrodes at two sides of the composite lamination 20 are under pressures of the opposite directions.

After the pressure is applied, the plurality of second electrodes 21 on the two sides of the composite lamination 20 move towards each other, and each push the corresponding first electrode 11 thereof to move, thereby causing the staggering of adjacent first electrodes 11; moreover, the two separators 12 are creased at the interstice between two adjacent first electrodes 11, and the crease can enable subsequent folding process to be completed more quickly.

Substep S1033: stopping exerting the pressures, when the opposite two sides of the composite lamination 20, where the respective second electrodes 21 are located, are flat.

During the continuous application of the pressure, the area corresponding to the second electrode 21 on the separator 12 at the same side as the respective second electrode 21 recesses gradually, and adjacent areas with no second electrode 21 disposed thereon protrude gradually, that is to say, the opposite two sides of the composite lamination 20 become flat gradually. When the opposite two sides of the composite lamination 20, where the respective second electrodes 21 are located, are flat, the pressure application stops, and at this time, the respective second electrodes 21 are aligned with the protruding areas of the separator 12 at the same side as the second electrodes.

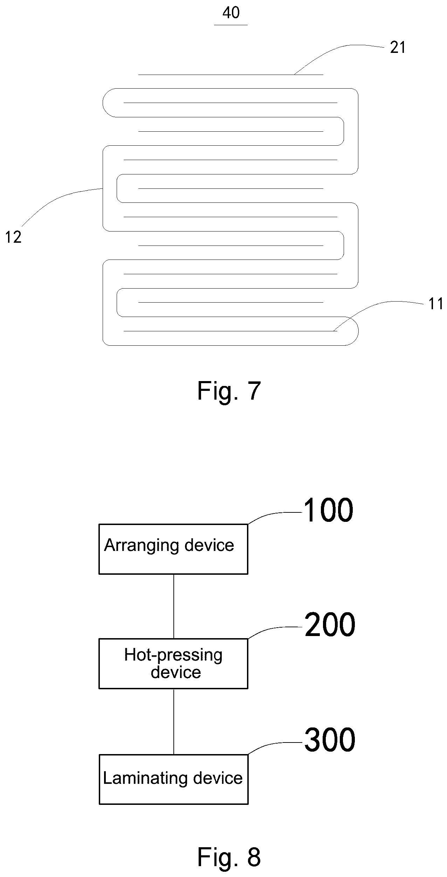

Further, in combination with Figs. 1 and 7, the method of preparing a laminated cell can further comprise:
Step S104: folding the staggered lamination 30 in a zigzag manner.

After Step S103, after completing the pressing of the composite lamination 20 to form the staggered lamination 30, the implementation of Step S104 begins. In an embodiment of the present disclosure, a laminating device is used to fold the staggered lamination 30 extending in the first direction in a zigzag manner, hereby forming a laminated cell 40. When performing the folding in the zigzag manner, since the bending strength of the electrode differs from that of the separator 12, there is an interstice between two adjacent first electrodes 11 on the continuous staggered lamination 30, and the separator 12 would be creased correspondingly at this interstice. Thus, there would be a bending at this interstice, i.e. the crease. As a result, each crease on the separator 12 indicates the position of each folding for the zigzag folding.

As to the staggered lamination 30 formed in Step S103, the plurality of first electrodes 11 thereof is staggered in the first direction, and creases are formed on the separator 12 at the staggered parts of the first electrodes 11. Thus, when folding the staggered lamination 30 in a zigzag manner, the separator 12 would not be dragged significantly by turning over the first electrodes 11, so the folding process is easier, and the first electrodes would not be damaged during the folding process due to the interstice between two adjacent first electrodes. In addition, after the folding of two adjacent first electrodes 11, attaching of the corresponding areas of the separator 12 is tighter.

Furthermore, it shall be understood that the plurality of first electrodes 11 successively arranged in the first direction can be deemed as a continuous whole sheet of first electrodes extending in the first direction, when the interstices between adjacent first electrodes 11 are small enough. In other words, in another embodiment, the plurality of first electrodes 11 in the internal layer 10 can be replaced by a whole continuous first electrode; and because of the flexibility of the continuous first electrode, the alternately arranged second electrodes 21 are staggered under stress and reversely abut against adjacent areas on the continuous first electrode, when the composite lamination 20 is pressed, as a result, this continuous first electrode is bent repeatedly in the first direction, that is to say, being creased like the separator 12.

Moreover, after folding, the openings along the two edges of the two separators 12 can be sealed, so as to protect the first electrodes 11. In the method of preparing a laminated cell provided in the embodiment of the present disclosure, the separator 12 only has openings at edges where the folding starts and ends, and the sealing operation is convenient and fast. In the conventional preparation method, the trimming is performed multiple times, resulting in that each layer of the stacked separators 12 has openings at two edges, that is to say, each layer of the separators 12 requires to be sealed, which process is troublesome and slows down the preparation speed.

In an embodiment of the present disclosure, a cathode is used as the first electrode 11, and an anode is used as the second electrode 21. In the method of preparing a laminated cell provided in the embodiment of the present disclosure, compared with the conventional preparation method, successive stacking is replaced by zigzag folding, a series of operations such as multiple trimming and positioning before the trimming are omitted, moreover, the stacking process is completed in one time, which greatly improves the preparation speed, saves the preparation costs, and is suitable for mass production.

In a laminated cell 40 prepared through the method of preparing a laminated cell provided in the embodiment of the present disclosure, the respective electrodes are accurately aligned with each other in the stacking layer direction, and the folding process is easier and faster, and the laminated cell 40 obtained after folding has a compacter structure, that is to say, the battery cell has a better quality. Moreover, the two separators 12 have openings only at the edges where folding starts and ends, achieving a better protection for the first electrodes 11

Fig. 8 shows a schematic block diagram of the structure of a laminating system which, in combination with Figs. 1-8, can be used in the method of preparing a laminated cell provided in the embodiments of the present disclosure, and can be configured as an automatic production line of laminated cells 40, hereby realizing mass production of laminated cells 40.

This laminating system comprises an arranging device 100, a hot-pressing device 200, and a laminating device 300;, conveying devices are respectively provided between the arranging device 100, the hot-pressing device 200 and the laminating device 300, where this conveying device may be a conveyor belt. The arranging device 100 is configured to lay out a plurality of first electrodes 11 successively and intervally between two separators 12 along a first direction, such that the plurality of first electrodes 11 and the two separators 12 form together an internal layer 10, and is used to lay out a plurality of second electrodes 21 successively on the both surface sides of the internal layer 10 along the first direction with the second electrodes on one surface side and the second electrodes on the other surface side placed alternately, such that the plurality of second electrodes 21 and the internal layer 10 form together a composite lamination 20; the hot-pressing device 200 is configured to hot-press the composite lamination 20, hereby forming a staggered lamination 30; and the laminating device 300 is configured to fold the staggered lamination 30 in a zigzag manner.

The arranging device 100 outputs the composite lamination 20 to the hot-pressing device 200 through the conveying device; the hot-pressing device 200 then hot-presses the composite lamination 20, hereby forming a staggered lamination 30; and this staggered lamination 30 is then transported to the laminating device 300, and the laminating device 300 folds the staggered lamination 30 in a zigzag manner, so as to form a laminated cell 40.

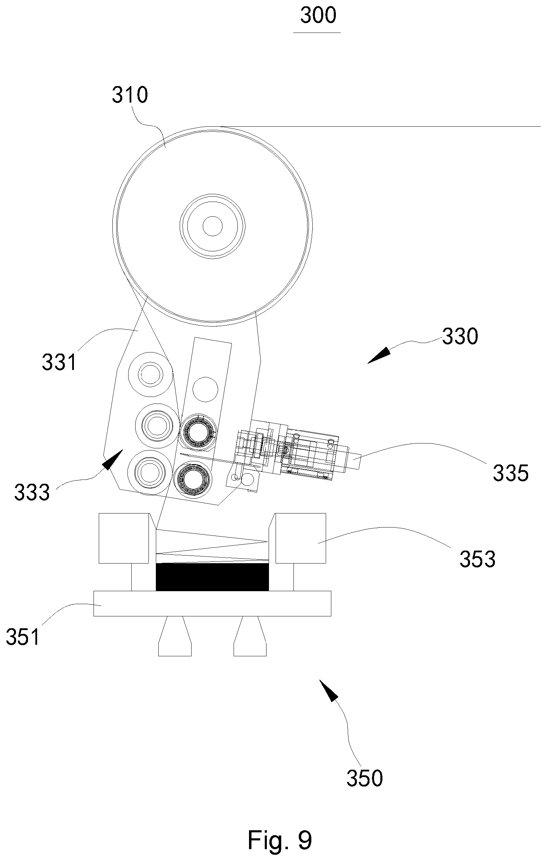

Fig. 9 shows a structural schematic diagram of this laminating device 300 for performing Step S104 in the method of preparing a laminated cell provided in the embodiment of the present disclosure. It comprises a guide roller 310, a feeding assembly 330, and a carrying assembly 350, wherein the guide roller 310 is disposed on the feeding assembly 330, or disposed upstream of this feeding assembly 330, and is in rotatable connection with the feeding assembly 330, for the purpose of guiding the continuous staggered lamination 30 outputted by the hot-pressing device 200 and transporting the staggered lamination 30 to the feeding assembly 330. The carrying assembly 350 is disposed under the feeding assembly 330, or disposed downstream of this feeding assembly 330, so as to carry the staggered lamination 30. The feeding assembly 330 is configured to transport the staggered lamination 30 coming from the guide roller 310 to the carrying assembly 350, and is further configured to reciprocally swing relative to the carrying assembly 350 during the transportation, such that the staggered lamination 30 is folded in a zigzag manner and the folded staggered lamination 30 is placed in the carrying assembly 350. During actual applications, the swing angle of the feeding assembly 330 can be adaptively adjusted according to folding requirements.

The feeding assembly 330 includes a swinging arm 331, a double roller driving assembly 333, and a cutting assembly 335, wherein the guide roller 310 is disposed at one end of the swinging arm 331 and is in rotatable connection with the swinging arm 331. The double roller driving assembly 333 is disposed on the swinging arm 331, and is in rotatable connection with the swinging arm 331, so as to transport the staggered lamination 30 to the carrying assembly 350. The double roller driving assembly 333 includes one separate guide die roll and two sets of clamping die rolls, wherein each set of clamping die rolls is provided with a driving member for rotation (a rotation driving member), and each set of clamping die rolls includes two small die rolls provided opposite to each other, wherein the driving member for rotation drives the two small die rolls to rotate relative to each other. The staggered lamination 30 guided and transported by the guide roller 310 passes by the guide die roll and is transported to the two sets of clamping die rolls, the staggered lamination 30 passes between the two small die rolls of each set of clamping die rolls and is clamped thereby, and under driving by the driving member for rotation, the two small die rolls of each set of clamping die rolls realize the clamping of the staggered lamination 30 and simultaneously transport the same to the carrying assembly 350.

During actual applications, the staggered lamination 30 is transported to the carrying assembly 350; with the one-way swinging of the swinging arm 331, the staggered lamination 30 is placed on the carrying assembly 350; and after pre-setting the swing angle, the swinging arm 331 performs returning swing, and now, the staggered lamination 30 is bent at the creases of the separator 12 and folded accordingly. The swinging arm reciprocally swings, hereby realizing the zigzag folding of the staggered lamination 30.

The cutting assembly 335 is provided on the swinging arm 331, and the cutting assembly 335 is configured to cut off the continuous staggered lamination 30 after finishing the folding.

The carrying assembly 350 includes a carrying platform 351 and a folding and flattening mechanism 353, wherein the carrying platform 351 is configured to carry the staggered lamination 30, and the carrying platform 351 is provided with an elevating mechanism, driven by which the carrying platform 351 can move towards or away from the guide roller 310, that is, move towards or away from the folding and flattening mechanism 353, so as to flatten the folded staggered lamination 30. Specifically, the folding and flattening mechanism 353 is provided on the carrying platform 351 in a standing manner and is provided with a protrusion part, wherein this folding and flattening mechanism is able to rotate about a vertical axis, and this protrusion part is able to move towards or away from the carrying platform 351. After finishing the folding, the folding and flattening mechanism 353 begins to rotate, so as to make the protrusion part placed on a top surface of the multi-layered staggered lamination 30; the protrusion part moves then towards a surface of the carrying platform 351, so as to realize the flattening of the multi-layered staggered lamination 30 in the stacking layer direction, wherein the creases are flattened, so as to obtain a laminated cell with a desired compactness.

Here, two folding and flattening mechanisms are provided, and the distance between the folding and flattening mechanisms may be an integral multiple of the length of the first electrode or the second electrode in the first direction, so as to assure that the staggered lamination 30 is folded at the gaps between electrodes. In addition, it could be understood that more folding and flattening mechanisms may be provided, so as to achieve a better flattening effect.

Moreover, it could be understood that as to the two configurations, i.e. the providing of an elevating mechanism enabling the movement of the carrying platform 351 relative to the folding and flattening mechanism 353 and the configuration of the protrusion part to be movable relative to the carrying platform 351, either one may be selected, or the both may be selected simultaneously, as long as the flattening of the folded staggered lamination 30 can be realized.

The laminating system can successively complete the steps of laying-out, pressing and zigzag folding the electrodes, to finally prepare a desired laminated cell. The preparation speed of laminated cells can be significantly improved, which indicates suitableness for mass production of laminated cells.

The above mentioned is merely preferred embodiments of the present disclosure, and is not intended to limit the present disclosure, and for a person skilled in the art, the present disclosure may be modified and changed in various ways.

### Industrial Applicability

The method of preparing a laminated cell provided in the embodiments of the present disclosure enables a convenient and fast preparation process, wherein the operation of stacking after cutting off is replaced by folding, meanwhile, additional operations such as positioning of trimming positions required to be performed before the cutting operation are omitted, and since the first electrodes are staggered and the separators are creased at the folding positions, the folding process can be completed rapidly without damaging the first electrodes. As a result, the preparation process of laminated cells is simplified, and the production efficiency is significantly improved, which indicates the suitableness for mass production.

## Claims

1. A method of preparing a laminated cell (40), comprising steps of:
laying out a plurality of first electrodes (11) successively and intervally between two separators (12) along a first direction, such that the plurality of first electrodes (11) and the two separators (12) form together an internal layer (10);
laying out a plurality of second electrodes (21) successively on both surface sides of the internal layer (10) along the first direction with the second electrodes (21) on one surface side and the second electrodes (21) on the other surface side placed alternately, such that the plurality of second electrodes (21) and the internal layer (10) form together a composite lamination (20), wherein each of the second electrodes (21) is parallel to the respective first electrode (11);
pressing the composite lamination (20), to form a staggered lamination (30); and
folding the staggered lamination (30) in a zigzag manner,
**characterized in that** the step of pressing the composite lamination (20) to form a staggered lamination (30) comprises steps of:
heating the composite lamination (20), such that a hot-melt adhesive adhered to the separator (12) melts; and
exerting opposite pressures on the respective second electrodes (21) on both sides of the composite lamination (20) in a stacking layer direction of the second electrodes (21), the separators (12) and the first electrodes (11), such that the separators (12) are each creased at an interstice between any two adjacent first electrodes (11);
wherein after the step of exerting opposite pressures on the respective second electrodes (21) on both sides of the composite lamination (20) in a stacking layer direction, the method further comprises a step of:
stopping exerting the pressures, when the opposite two sides of the composite lamination (20) are flat.

2. The method of preparing a laminated cell (40) according to claim 1, wherein the step of laying out a plurality of second electrodes (21) successively on both surface sides of the internal layer (10) along the first direction with the second electrodes (21) on one surface side and the second electrodes (21) on the other surface side placed alternately to form a composite lamination (20) comprises steps of:
placing one of two adjacent second electrodes (21) on the separator (12) on one surface side of the internal layer (10), with the one corresponding to one of two adjacent first electrodes (11); and
placing the other one of the two adjacent second electrodes (21) on the separator (12) on the other surface side of the internal layer (10), with the other one corresponding to the other one of the two adjacent first electrodes (11).

3. The method of preparing a laminated cell (40) according to claim 1 or 2, wherein the step of folding the staggered lamination (30) in a zigzag manner comprises a step of:
folding the staggered lamination (30) in a zigzag manner, wherein respective interstices formed between respective first electrodes (11) are used as folding positions.

4. The method of preparing a laminated cell (40) according to any one of claims 1-3, further comprising a step of flattening the staggered lamination (30) folded in a zigzag manner to obtain a compact laminated battery cell (40).

5. The method of preparing a laminated cell (40) according to any one of claims 1-4, further comprising a step of sealing openings along edges of the two separators (12).

6. The method of preparing a laminated cell (40) according to any one of claims 1-5, wherein a cathode is used as the first electrode (11), and an anode is used as the second electrode (21).

7. The method of preparing a laminated cell (40) according to any one of claims 1-6, wherein the first direction is parallel to an extension direction of the separators (12).

## Patentansprüche

1. Verfahren zum Anfertigen einer laminierten Zelle (40), umfassend die folgenden Schritte:
aufeinanderfolgendes und beabstandetes Anordnen mehrerer erster Elektroden (11) entlang einer ersten Richtung zwischen zwei Separatoren (12), damit die mehreren ersten Elektroden (11) und die beiden Separatoren (12) gemeinsam eine innere Schicht (10) bilden;
aufeinanderfolgendes Anordnen mehrerer zweiter Elektroden (21) entlang der ersten Richtung an beiden Flächenseiten der inneren Schicht (10), damit die zweiten Elektroden (21) an einer Flächenseite und die zweiten Elektroden (21) an der anderen Flächenseite abwechselnd angeordnet werden, so dass die mehreren zweiten Elektroden (21) und die innere Schicht (10) gemeinsam ein Verbundlaminat (20) bilden, wobei jede der zweiten Elektroden (21) parallel zu einer entsprechenden ersten Elektrode (11) liegt;
Pressen des Verbundlaminats (20), um ein versetztes Laminat (30) zu bilden; und
zickzackartiges Falten des versetzten Laminats (30),
**dadurch gekennzeichnet, dass** der Schritt des Pressens des Verbundlaminats (20), um ein versetztes Laminat (30) zu bilden, die folgenden Schritte umfasst:
Erhitzen des Verbundlaminats (20), damit ein auf den Separator (12) aufgebrachter Heißschmelzklebstoff schmilzt; und
Ausüben von entgegengesetzten Drücken auf die jeweiligen zweiten Elektroden (21) an beiden Seiten des Verbundlaminats (20) in einer Richtung der Stapelschicht aus den zweiten Elektroden (21), den Separatoren (12) und den ersten Elektroden (11), damit die Separatoren (12) jeweils an einem Zwischenraum zwischen jeweiligen benachbarten ersten Elektroden (11) geknickt werden;
wobei das Verfahren nach dem Schritt des Ausübens von entgegengesetzten Drücken auf die jeweiligen zweiten Elektroden (21) an beiden Seiten des Verbundlaminats (20) in einer Richtung der Stapelschicht ferner den folgenden Schritt umfasst:
Beenden der Druckausübung, wenn die entgegengesetzten beiden Seiten des Verbundlaminats (20) flach sind.

2. Verfahren zum Anfertigen einer laminierten Zelle (40) nach Anspruch 1, wobei der Schritt des aufeinanderfolgenden Anordnens mehrerer zweiter Elektroden (21) entlang der ersten Richtung an beiden Flächenseiten der inneren Schicht (10), bei dem die zweiten Elektroden (21) an einer Flächenseite und die zweiten Elektroden (21) an der anderen Flächenseite abwechselnd angeordnet werden, um ein Verbundlaminat (20) zu bilden, die folgenden Schritte umfasst:
Anordnen einer von zwei benachbarten zweiten Elektroden (21) auf dem Separator (12) an einer Flächenseite der inneren Schicht (10), wobei diese eine einer von zwei benachbarten ersten Elektroden (11) entspricht; und
Anordnen der anderen der beiden benachbarten zweiten Elektroden (21) auf dem Separator (12) an der anderen Flächenseite der inneren Schicht (10), wobei diese andere der anderen der beiden benachbarten ersten Elektroden (11) entspricht.

3. Verfahren zum Anfertigen einer laminierten Zelle (40) nach Anspruch 1 oder 2, wobei der Schritt des zickzackartigen Faltens des versetzten Laminats (30) den folgenden Schritt umfasst:
zickzackartiges Falten des versetzten Laminats (30), wobei jeweilige Zwischenräume, die zwischen jeweiligen ersten Elektroden (11) gebildet sind, als Faltpositionen verwendet werden.

4. Verfahren zum Anfertigen einer laminierten Zelle (40) nach einem der Ansprüche 1 bis 3, ferner umfassend einen Schritt des Abflachens des zickzackartig gefalteten versetzten Laminats (30), um eine kompakte laminierte Batteriezelle (40) zu erhalten.

5. Verfahren zum Anfertigen einer laminierten Zelle (40) nach einem der Ansprüche 1 bis 4, ferner umfassend einen Schritt des Versiegelns von Öffnungen entlang von Rändern der beiden Separatoren (12).

6. Verfahren zum Anfertigen einer laminierten Zelle (40) nach einem der Ansprüche 1 bis 5, wobei eine Kathode als die erste Elektrode (11) verwendet wird und eine Anode als die zweite Elektrode (21) verwendet wird.

7. Verfahren zum Anfertigen einer laminierten Zelle (40) nach einem der Ansprüche 1 bis 6, wobei die erste Richtung parallel zu einer Ausdehnungsrichtung der Separatoren (12) verläuft.

## Revendications

1. Procédé de préparation d'une cellule stratifiée (40), comprenant les étapes suivantes :
la disposition d'une pluralité de premières électrodes (11) successivement et par intervalles entre deux séparateurs (12) le long d'une première direction, de telle sorte que la pluralité de premières électrodes (11) et les deux séparateurs (12) forment ensemble une couche interne (10) ;
la disposition d'une pluralité de deuxièmes électrodes (21) successivement sur les deux côtés de surface de la couche interne (10) le long de la première direction avec les deuxièmes électrodes (21) sur un côté de surface et les deuxièmes électrodes (21) sur l'autre côté de surface placées alternativement, de telle sorte que la pluralité de deuxièmes électrodes (21) et la couche interne (10) forment ensemble une stratification composite (20), dans lequel chacune des deuxièmes électrodes (21) est parallèle à la première électrode (11) respective ;
la compression de la stratification composite (20) pour former une stratification en quinconce (30) ; et
le pliage de la stratification en quinconce (30) dans une forme de zigzag,
**caractérisé en ce que** l'étape consistant à presser la stratification composite (20) pour former une stratification en quinconce (30) comprend les étapes suivantes :
le chauffage de la stratification composite (20), de manière à faire fondre un adhésif thermofusible collé sur le séparateur (12) ; et
l'exercice de pressions opposées sur les deuxièmes électrodes (21) respectives des deux côtés de la stratification composite (20) dans le sens de l'empilement des deuxièmes électrodes (21), des séparateurs (12) et des premières électrodes (11), de telle sorte que les séparateurs (12) sont chacun plissés au niveau d'un interstice situé entre deux premières électrodes adjacentes (11) ;
dans lequel, après l'étape consistant à exercer des pressions opposées sur les deuxièmes électrodes (21) respectives des deux côtés de la stratification composite (20) dans le sens de l'empilement des couches, le procédé comprend en outre une étape comprenant :
l'arrêt de l'exercice des pressions, lorsque les deux côtés opposés de la stratification composite (20) sont plats.

2. Procédé de préparation d'une cellule stratifiée (40) selon la revendication 1, dans lequel l'étape consistant à disposer une pluralité de deuxièmes électrodes (21) successivement sur les deux côtés de surface de la couche interne (10) le long de la première direction, les deuxièmes électrodes (21) sur un côté de surface et les deuxièmes électrodes (21) sur l'autre côté de surface étant placées alternativement de manière à former une stratification composite (20), comprend les étapes suivantes :
le placement de l'une des deux deuxièmes électrodes adjacentes (21) sur le séparateur (12) sur un côté de surface de la couche interne (10), celle correspondant à l'une des deux premières électrodes adjacentes (11) ; et
le placement de l'autre des deux deuxièmes électrodes adjacentes (21) sur le séparateur (12) sur l'autre côté de surface de la couche interne (10), l'autre correspondant à l'autre des deux premières électrodes adjacentes (11).

3. Procédé de préparation d'une cellule stratifiée (40) selon la revendication 1 ou la revendication 2, dans lequel l'étape de pliage de la stratification en quinconce (30) dans une forme de zigzag comprend l'étape suivante :
le pliage de la stratification en quinconce (30) dans une forme de zigzag, dans lequel les interstices respectifs formés entre les premières électrodes respectives (11) sont utilisés en tant que positions de pliage.

4. Procédé de préparation d'une cellule stratifiée (40) selon l'une quelconque des revendications 1 à 3, comprenant en outre une étape d'aplatissement de la stratification en quinconce (30) pliée dans une forme en zigzag afin d'obtenir une cellule de batterie stratifiée compacte (40).

5. Procédé de préparation d'une cellule stratifiée (40) selon l'une quelconque des revendications 1 à 4, comprenant en outre une étape de scellement des ouvertures le long des bords des deux séparateurs (12).

6. Procédé de préparation d'une cellule stratifiée (40) selon l'une quelconque des revendications 1 à 5, dans lequel une cathode est utilisée comme première électrode (11), et une anode est utilisée comme deuxième électrode (21).

7. Procédé de préparation d'une cellule stratifiée (40) selon l'une quelconque des revendications 1 à 6, dans lequel la première direction est parallèle à une direction d'extension des séparateurs (12).
